**Europäisches Patentamt**

**European Patent Office**

**Office européen des brevets**

(19)

(11) Veröffentlichungsnummer: **0 299 138 B1**

(12) # EUROPÄISCHE PATENTSCHRIFT

(45) Veröffentlichungstag der Patentschrift: **15.01.92**

(51) Int. Cl.⁵: **D21C 5/02**

(21) Anmeldenummer: **88103505.9**

(22) Anmeldetag: **07.03.88**

(54) **Verfahren zur Flotation von Füllstoffen aus Altpapier.**

(30) Priorität: **16.07.87 DE 3723502**

(43) Veröffentlichungstag der Anmeldung:
**18.01.89 Patentblatt 89/03**

(45) Bekanntmachung des Hinweises auf die
Patenterteilung:
**15.01.92 Patentblatt 92/03**

(84) Benannte Vertragsstaaten:
**AT DE FR GB IT SE**

(56) Entgegenhaltungen:
DE-A- 3 401 444
DE-A- 3 512 309
GB-A- 1 273 678

DAS PAPIER, Band 40, Nr. 9, September
1986, Seite L47, rechte Spalte, Absatz 2,
Darmstadt, DE; K. HORNFECK: "Chemie und
Wirkungsweise der Tenside als Sammlerchemikalien für Drucktarben und Füllstoffe
im Flotations-Deinking Prozess"

CHEMICAL ABSTRACTS, Band 91, Nr. 2, 9.
Juli 1979, Seite 90, Zusammenfassung Nr.
6716p, Columbus, Ohio, US

ABSTRACT B. OF PAPER CHEMISTRY, Band
49, Nr. 7, Januar 1979, Seite 710, Zusammenfassung Nr. 6493(U)

(73) Patentinhaber: **Henkel Kommanditgesellschaft
auf Aktien
Postfach 1100 Henkelstrasse 67
W-4000 Düsseldorf-Holthausen(DE)**

(72) Erfinder: **Hornfeck, Klaus
August-Burberg-Strasse 34
W-4020 Mettmann(DE)**
Erfinder: **Von Rybinski, Wolfgang, Dr.
Leinenweberweg 12
W-4000 Düsseldorf 13(DE)**

EP 0 299 138 B1

**Beschreibung**

Die Erfindung betrifft ein Verfahren zur Trennung von Füllstoffen und Papierfasern durch Flotation.

Fast alle Papiere werden mit Füllstoffen versetzt, um ihre Bedruckbarkeit, Dichtigkeit und Opazität zu verbessern sowie eine gleichmäßigere Durchsicht und einen größeren Weißgrad zu erhalten. Die zum Einsatz gelangenden Füllstoffe sind mineralischer Natur oder chemisch gefällte Produkte, beispielsweise Aluminiumsilikate, wie Kaoline oder kieselsaure Tonerde, Calciumcarbonate, wie Kreide oder Kalk, Talkum, Calciumsulfat und/oder Bariumsulfat (Ullmanns Encyclopädie der technischen Chemie, 17, 577 ff. (1979)). Der Füllstoffanteil in der Papiermasse hängt vom Verwendungszweck des Papiers ab und liegt in den meisten Fällen zwischen 7 und 25 Gew.-%. Um ein Papier mit standardisierten Qualitätsmerkmalen herstellen zu können, ist es unbedingt erforderlich, daß die zur Papierherstellung notwendigen Roh- und Hilfsstoffe eine gleichbleibende Qualität aufweisen.

Bedruckte Altpapiere werden in großen Mengen bei der Erzeugung von Druck- und Tissuepapieren eingesetzt. Zur Erzielung einer hohen Papierweiße müssen die Druckfarben aus den bedruckten Altpapieren entfernt werden. Dies geschieht mittels Deinking-Verfahren, die im wesentlichen in 2 Teilschritten ablaufen:

1. Ablösung der Druckfarbteilchen von der Faser im Stofflöser durch Zusatz geeigneter Chemikalien und
2. Ausscheidung der abgelösten Druckfarbenteilchen aus der Faserstoffsuspension.

Der zweite Verfahrensschritt kann durch Flotation und/oder Auswaschen erfolgen (Taschenlexikon der Papierherstellung, S. 53 bis 54, Verlag Dr. Martin Sändig oHG, Walluf (1973)). Üblicherweise wird das Deinken bei alkalischen pH-Werten in Gegenwart von Alkalihydroxid, Alkalisilikat, oxidativ wirkenden Bleichmitteln, höheren Fettsäuren oder deren löslichen Salzen sowie nichtionischen Dispergiermitteln zwischen 30 und 50 °C durchgeführt.

Die bekannten Verfahren zur Ausscheidung der abgelösten Druckfarbenteilchen aus der Faserstoffsuspension weisen jedoch gravierende Nachteile auf: Durch Flotation wird der hohe Füllstoffanteil in Altpapieren nur sehr unvollständig entfernt, so daß der Anteil an deinktem Altpapier bei der Papierherstellung, insbesondere bei der Herstellung von Zeitungsdruckpapieren, auf etwa 50 Gew.-% begrenzt wird. Die Papierwäsche entfernt zwar neben den Druckfarben auch die in Altpapieren enthaltenen Füllstoffe, jedoch mit dem Nachteil eines sehr hohen Faserverlustes und einer sehr starken Wasserbelastung.

Aus "Wochenblatt für Papierfabrikation" 17, 646 bis 649 (1985) ist bekannt, daß verschiedene Tenside, insbesondere quaternäre Ammoniumverbindungen, ampholytische Tenside und Alkylbenzolsulfonate in der Lage sind, durch Flotation mehr Füllstoffe aus dem Altpapier zu entfernen als die üblicherweise zum Einsatz gelangenden Fettsäuren/Seifen und nichtionischen Tenside.

Die Aufgabe der Erfindung bestand in der Entwicklung eines Verfahrens, mit dem es möglich ist, den Füllstoffaustrag aus Altpapieren zu steigern.

Die Erfindung geht von der überraschenden Feststellung aus, daß die Trennung von Füllstoffen und Papierfasern durch Flotation mit anionischen Tensiden durch Zusatz wasserlöslicher Salze dreiwertiger Metallionen signifikant erhöht wird.

Gegenstand der Erfindung ist dementsprechend ein Verfahren zur Trennung von Füllstoffen und Papierfasern durch Flotation, das dadurch gekennzeichnet ist, daß nach der Druckfarbenflotation die wäßrigen Papierstoffsuspensionen

1. mit wasserlöslichen Salzen dreiwertiger Metallionen versetzt werden, so daß sich pH-Werte zwischen 4,5 und 9 einstellen und
2. nach Zugabe von 0,1 bis 8 g anionischer Tenside pro kg Papierstoff in an sich bekannter Weise flotiert werden.

Unter dem Begriff "Füllstoffe" werden die in der Papierindustrie üblicherweise verwendeten Substanzen, beispielsweise Aluminiumsilikate, wie Kaoline oder kieselsaure Tonerde, Calciumcarbonate, wie Kreide oder Kalk, Talkum, Calciumsulfat und/oder Bariumsulfat verstanden.

Der Begriff "Papierfaser" steht für die durch Schleifen von Holz (Holzschliff) oder durch Zerreißen von Holzstückchen in Scheibenmahlgeräten (Raffineurholzstoff) entstehenden Holzstoffe und/oder die durch Einwirken von Chemikalien und Temperatur auf Holzschnitzel gewonnenen Halbzellstoffe und Zellstoffe.

Der pH-Wert des erfindungsgemäßen Verfahrens liegt vorzugsweise zwischen 6 und 8. Dieser pH-Wert wird nach der alkalischen Druckfarbenflotation durch Zugabe wasserlöslicher Salze dreiwertiger Metallionen eingestellt. Dabei werden vorzugsweise 0.05 bis 1 g, besonders bevorzugt 0,2 bis 0,5 g wasserlöslicher Salze dreiwertiger Metallionen pro Liter wäßriger Papierstoffsuspension eingesetzt. Wasserlösliche Sulfate, Chloride, Acetate, Hydroxide, Phosphate und/oder Polyphosphate dreiwertiger Metallionen, insbesondere Chrom-(III)-sulfat, Aluminiumsulfat und/oder Eisensulfat, eignen sich als wasserlösliche Salze dreiwertiger Metallionen für das erfindungsgemäße Verfahren. Besonders bevorzugt wird Aluminiumsulfat.

Die anschließende Flotation wird mit 0,1 bis 8 g, vorzugsweise mit 1 bis 4 g anionischer Tenside pro kg Papierstoff als Sammler durchgeführt.

Als anionische Tenside eignen sich insbesondere $C_{8-24}$-Alkylsulfate, hergestellt durch Umsetzung von $C_{8-24}$-Alkoholen, beispielsweise Laurylalkohol oder Talgfettalkohol mit Oleum, Amidosulfonsäure, Chlorsulfonsäure oder Schwefeltrioxid, $C_{8-24}$-Alkylethersulfate, hergestellt durch Umsetzung von $C_{8-24}$-Alkoholen mit 1 bis 100 Mol Ethylenoxid (EO) und anschließende Sulfatierung mit Oleum, Amidosulfonsäure, Chlorsulfonsäure oder Schwefeltrioxid, beispielsweise Laurylalkohol + 30 EO-Sulfat, $C_{3-24}$-Alkylphenolethersulfate, hergestellt durch Umsetzung von Mono-, Di- oder Trialkylphenol mit 1 bis 100 Mol Ethylenoxid und anschließende Sulfatierung mit Oleum, Amidosulfonsäure, Chlorsulfonsäure oder Schwefeltrioxid, beispielsweise Nonylphenol + 4 EO-Sulfat, $C_{8-24}$-Alkyl- und/oder $C_{3-24}$-Alkylphenolethersulfate, hergestellt durch Umsetzung von $C_{8-24}$-Alkoholen und/oder Mono-, Di- oder Trialkylphenolen mit 1 bis 100 Mol Ethylenoxid und anschließende Umsetzung mit Polyphosphorsäuren oder Phosphorsäureanhydrid, beispielswiese Laurylalkohol + 10 EO-Phosphat, Sulfobernsteinsäurehalbester von $C_{8-24}$-Alkyl- oder $C_{3-24}$-Alkylphenolpolyglycoletheralkoholen, hergestellt durch Umsetzung von $C_{8-24}$-Alkyl- oder $C_{3-24}$-Alkylphenolpolyglycoletheralkoholen mit Maleinsäureanhydrid und anschließende Sulfitierung mit Natriumhydrogensulfit, beispielsweise Nonylphenol + 10 EO-Sulfosuccinat, Sulfobernsteinsäurehalbester von $C_{8-24}$-Alkanolen oder $C_{8-24}$-Alkylaminen, beispielsweise Laurylsulfosuccinat oder Talgaminsulfosuccinamat, Sulfobernsteinsäureester von $C_{4-18}$-Alkoholen, hergestellt durch Sulfitierung der entsprechenden Maleinsäurediester nach einem der EP-C-87 711 beschriebenen Verfahren, $C_{8-24}$-Alkylbenzolsulfonate, hergestellt durch Sulfonierung von $C_{8-24}$-Alkylbenzolen mit konzentrierter Schwefelsäure, Oleum oder Schwefeltrioxid, beispielsweise n-Dodecylbenzolsulfonat, Sulfocarbonsäurealkylester und/oder Sulfocarbonsäuren mit 8 bis 24 C-Atomen im Carbonsäureteil, wie beispielsweise in US-A-4 529 762 oder DE-A-35 13 046 beschrieben, $C_{3-8}$-Alkylnaphthalinsulfonate, hergestellt durch Umsetzung von $C_{3-8}$-Alkoholen mit Naphthalin in Gegenwart konzentrierter Schwefelsäure oder Oleum, sekundäre Alkansulfonate, hergestellt durch Sulfonierung oder Sulfoxidation von Paraffinkohlenwasserstoffen und/oder sulfatierte und/oder sulfonierte Triglyceride, beispielsweise sulfatiertes Rizinusöl. Die anionischen Tenside werden in Form ihrer wasserlöslichen Alkali- und/oder Ammoniumsalze, insbesondere in Form ihrer Natrium-und/oder Ammoniumsalze. Die Bezeichnung "Alkyl" steht für gerad- und/oder verzweigtkettige, gesättigte und/oder ungesättigte Alkylreste natürlichen und/oder synthetischen Ursprungs.

Die mit dem erfindungsgemäßen Verfahren erhaltenen Altpapiere zeichnen sich im Vergleich zu Altpapieren, die ohne Zusatz wasserlöslichen Salze dreiwertiger Metallionen flotiert wurden, durch deutlich geringere Füllstoffanteile aus. Mit dem erfindungsgemäßen Verfahren ist nunmehr die Möglichkeit gegeben, den Anteil an deinktem Altpapier bei der Papierherstellung auf über 50 Gew.-% zu steigern.

Nach der Druckfarbenflotation werden die wäßrigen Papierstoffsuspensionen erfindungsgemäß mit vorzugsweise 0,05 bis 1 g, besonders bevorzugt mit 0,2 bis 0,5 g wasserlöslicher Salze dreiwertiger Metallionen pro Liter Suspension bei 20 bis 60 °C versetzt, so daß sich ein pH-Wert zwischen 4,5 und 9, vorzugsweise zwischen 6 und 8 einstellt und nach Zugabe von 0,1 bis 8 g, vorzugsweise von 1 bis 4 g anionischer Tenside pro kg Papierstoff als Sammler zwischen 20 °C und etwa 95 °C, vorzugsweise zwischen 45 und 60 °C flotiert.

Beispiele

Die Flotationen wurden in einer Denver-Laborflotationszelle von etwa 9 l Inhalt an wäßrigen Papierstoffsuspensionen mit etwa 1 Gew.-% Stoffdichte pro l Wasser durchgeführt.

Beispiele 1 bis 3

Eine Altpapiermischung aus 100 Gew.-% Illustrationsdruckpapieren wurde bei 5 Gew.-% Stoffdichte im Laborpulper mit einer Lösung bestehend aus
2 Gew.-% Natronwasserglas, 38 - 40 °Bé′
1 Gew.-% Natriumhydroxid (100%ig)
0,7 Gew.-% Wasserstoffperoxid, 100%ig
0,4 Gew.-% Fettsäure (Olinor 4010)
95,9 Gew.-% Wasser
bei 45 °C aufgeschlagen, nach 90 Minuten Verweilzeit bei 45 °C auf 1 Gew.-% Stoffdichte verdünnt und in einer Denver-Laborflotationszelle bei 45 °C flotiert.

In Beispiel 1 wurde der Füllstoffgehalt im Papier unmittelbar nach der Druckfarbenflotation ermittelt. In Beispiel 2 wurde nach der Druckfarbenflotation eine weitere Flotation in Gegenwart von 0,3 g Natrium-$C_{12-18}$-Alkylbenzolsulfonat pro 100 g Papier bei 45 °C durchgeführt. In Beispiel 3 wurde der wäßrigen

3

Papierstoffsuspension nach der Druckfarbenflotation 0,3 g Aluminiumsulfat pro l Suspension zugesetzt, so daß sich ein pH-Wert von 6 einstellte. Anschießend wurde in Gegenwart von 0,3 g Natrium-$C_{12-18}$-Alkylbenzolsulfonat pro 100 g Papier bei 45 °C flotiert.

Die Ergebnisse sind in Tabelle 1 zusammengefaßt.

### Tabelle 1:

Flotation von Kaolin/Papierfasern: 100 % Illustrationsdruckpapier; mit Natrium-$C_{12-18}$-Alkylbenzolsulfonat als Sammler

| Bei-spiel | Aluminiumsul-fat g/l Sus-pension | Sammler g/100 g Papier | Füllstoffgehalt in Papier in Gew.-% |
|---|---|---|---|
| | | | 25 im Ausgangspapier |
| 1 | – | – | 19 nach Druckfarben-flotation |
| 2 | – | 0,3 | 12,4 |
| 3 | 0,3 | 0,3 | 7,1 |

Beispiele 4 bis 6

Es wurde wie in den Beispielen 1 bis 3 beschrieben verfahren, jedoch anstelle von 100 % Illustrationsdruckpapieren eine Altpapiermischung, bestehend aus 60 Gew.-% Illustrierten und 40 Gew.-% Tageszeitungen, verwendet.

Die Ergebnisse sind in Tabelle 2 zusammengefaßt.

4

Tabelle 2:

Flotation von Kaolin/Papierfasern: Papiermischung bestehend aus 60 Gew.-% Illustrierten und 40 Gew.-% Tageszeitungen; Natrium-$C_{12-18}$-Alkylbenzolsulfonat als Sammler.

| Bei-spiel | Aluminiumsul-fat g/l Sus-pension | Sammler g/100 g Papier | Füllstoffgehalt in Papier in Gew.-% |
|---|---|---|---|
|  |  |  | 18 im Ausgangs-papier |
| 4 | - | - | 13 nach Druck-farbenflotation |
| 5 | - | 0,3 | 11,5 |
| 6 | 0,3 | 0,3 | 6,0 |

**Patentansprüche**

1. Verfahren zur Trennung von Füllstoffen und Papierfasern durch Flotation, dadurch gekennzeichnet, daß nach der Druckfarbenflotation die wäßrigen Papierstoffsuspensionen

1. mit wasserlöslichen Salzen dreiwertiger Metallionen versetzt werden, so daß sich pH-Werte zwischen 4,5 und 9 einstellen und
2. nach Zugabe von 0,1 bis 8 g anionischer Tenside pro kg Papierstoff in an sich bekannter Weise flotiert werden.

2. Verfahren nach Anspruch 1, dadurch gekennzeichnet, daß sich in den wäßrigen Papierstoffsuspensionen nach Zugabe wasserlöslicher Salze dreiwertiger Metallionen pH-Werte zwischen 6 und 8 einstellen.

3. Verfahren nach einem oder beiden der Ansprüche 1 und 2, dadurch gekennzeichnet, daß die wäßrigen Papierstoffsuspensionen mit 0,05 bis 1 g, vorzugsweise mit 0,2 bis 0,5 g wasserlöslichen Salzen dreiwertiger Metallionen pro l Suspension versetzt werden.

4. Verfahren nach einem oder mehreren der Ansprüche 1 bis 3, dadurch gekennzeichnet, daß als wasserlösliche Salze dreiwertiger Metallionen Chrom(III)-, Aluminium- und/oder Eisensulfat, vorzugsweise Aluminiumsulfat, eingesetzt wird.

5. Verfahren nach einem oder mehreren der Ansprüche 1 bis 4, dadurch gekennzeichnet, daß 1 bis 4 g anionischer Tenside pro kg Papierstoff eingesetzt werden.

6. Verfahren nach einem oder mehreren der Ansprüche 1 bis 5, dadurch gekennzeichnet, daß Alkali- und/oder Ammoniumsalze von $C_{8-24}$-Alkylsulfaten, $C_{8-24}$-Alkylethersulfaten, $C_{8-24}$-Alkylbenzolsulfonaten und/oder Sulfobernsteinsäurehalbestern von $C_{8-24}$-Alkoholen als anionische Tenside eingesetzt werden.

## Claims

1. A process for the separation of fillers and paper fibres by flotation which is characterized in that, after flotation of the printing ink,

   1. water-soluble salts of trivalent metal ions are added to the aqueous paper pulp suspensions, so that pH values of from 4.5 to 9 are established and
   2. the paper pulp suspensions are floated in known manner after the addition of 0.1 to 8 g anionic surfactants per kg paper pulp.

2. A process as claimed in claim 1, characterized in that pH values of 6 to 8 are established in the aqueous paper pulp suspensions after addition of the water-soluble salts of trivalent metal ions.

3. A process as claimed in one or both of claims 1 and 2, characterized in that the water-soluble salts of trivalent metal ions are added to the aqueous pulp suspensions in a quantity of 0.05 to 1 g and preferably in a quantity of 0.2 to 0.5 g per litre suspension.

4. A process as claimed in one or more of claims 1 to 3, characterized in that chromium(III) sulfate, aluminium sulfate and/or iron sulfate, preferably aluminium sulfate, is/are used as the water-soluble salts of trivalent metal ions.

5. A process as claimed in one or more of claims 1 to 4, characterized in that 1 to 4 g anionic surfactants are used per kg paper pulp.

6. A process as claimed in one or more of claims 1 to 5, characterized in that alkali and/or ammonium salts of $C_{8-24}$ alkyl sulfates $C_{8-24}$ alkyl ether sulfates, $C_{8-24}$ alkyl benzenesulfonates and/or sulfosuccinic acid semiesters of $C_{8-24}$ alcohols are used as the anionic surfactants.

## Revendications

1. Procédé de séparation des substances de charge et des fibres de papier par flottation, caractérisé en ce qu'après la flottation des couleurs d'impression, les suspensions aqueuses de pâte de papier :
   - 1) sont mélangées avec des sels solubles dans l'eau d'ions métalliques trivalents de façon à obtenir des valeurs de pH comprises entre 4,5 et 9, et
   - 2) sont mises en flottation d'une manière connue en soi, après addition de 0,1 a' 8 g d'agents tensio-actifs par Kg de pâte de papier.

2. Procédé selon la revendication 1, caractérisé en ce que des valeurs de pH entre 6 et 8 sont ajustées dans les suspensions aqueuses de pâte de papier après addition de sels solubles dans l'eau d'ions métalliques trivalents.

3. Procédé selon l'une ou les deux revendications 1 et 2, caractérisé en ce que les suspensions aqueuses de pâte de papier sont additionnées de 0,05 à 1 g, de préférence de 0,2 à 0,5 g, de sels solubles dans l'eau d'ions métalliques trivalents par litre de suspension.

4. Procédé selon l'une ou plusieurs des revendications 1 à 3, caractérisé en ce que l'on met en oeuvre comme sels solubles dans l'eau d'ions métalliques trivalents, du sulfate de chrome (III), d'aluminium et/ou de fer, de préférence du sulfate d'aluminium.

5. Procédé selon l'une ou plusieurs des revendications 1 à 4, caractérisé en ce que 1 à 4 g d'agents tensio-actifs anioniques sont mis en jeu par Kg de pâte de papier.

6. Procédé selon l'une ou plusieurs des revendications 1 à 5, caractérisé en ce que l'on met en jeu comme agents tensio-actifs anioniques des sels alcalins et/ou d'ammonium d'alcoyle en $C_8$-$C_{24}$

sulfates, d'alcoyle d'éther en $C_8$-$C_{24}$ sulfates, d'alcoyle en $C_8$-$C_{24}$ benzène sulfonates, et/ou des hemi-esters d'acide sulfosuccinique d'alcools en $C_8$-$C_{24}$.